# EUROPEAN PATENT SPECIFICATION

(11) **EP 0 916 885 B1**
(45) Date of publication and mention of the grant of the patent: **02.05.2002**
(21) Application number: 98124316.5
(22) Date of filing: 23.07.1991
(51) Int. Cl.: F16L 21/00

(54) **Pipe Coupling**
Rohrkupplung
Raccord de tuyaux

(30) Priority: 25.01.1991 GB 9101641; 27.07.1990 GB 9016489
(43) Date of publication of application: 19.05.1999
(62) Divisional of application: 95105222.4
(73) Proprietor: Taylor Kerr (Couplings) Limited, London W1R 7LF (GB)
(72) Inventor: Webb, Ian Richard, Gerrards Cross, Buckinghamshire SL9 7LQ (GB); Taylor, William, Pinner, Middlesex (GB); Taylor, Neil John Thornton, Rickmansworth, Hertfordshire WD3 2HA (GB)
(74) Representative: Brereton, Paul Arthur

(56) References cited:
- EP-A- 0 184 783
- EP-A- 0 205 896
- DE-A- 3 301 229
- GB-A- 2 186 651
- US-A- 3 790 194
- US-A- 3 877 733

## Description

The present invention relates to pipe couplings for connecting together two plain-ended pipes in a fluid-tight manner, of the type consisting of a tubular casing formed with a longitudinal gap, a sealing sleeve of resilient flexible material arranged within the casing, and tensioning means for reducing the width of the longitudinal gap. In use, the sealing sleeve is placed around the adjacent pipe ends and the tensioning means are tightened to clamp the sleeve against the outer surfaces of the pipe ends to form a fluid tight seal.

One known pipe coupling of this type is described in GB - A 1582858. The sealing sleeve is of C-shaped longitudinal cross-section having two lips extending axially inwardly towards one another so as to form a groove between the extension and the web portion. When the casing is tightened around the pipe ends the lips of the sealing sleeve are pressed into sealing engagement with the outer surfaces of the pipe ends to form a seal. In use fluid carried by the pipes passes through the gap between the pipe ends into the space between the outside of the pipe end and the inside of the web portion of the sleeve. The fluid enters the grooves between the extensions of the lips causing the sealing pressure of the extensions against the pipes to increase as the pressure of the fluid increases.

According to the present invention there is provided a pipe coupling according to claim 1.

Preferably the end seals are axial extensions of sealing sleeve which are trapped between the flanges and the pipes. The end seals prevent dirt, water or other contaminants entering between the flanges and the pipe and corroding components of the coupling or impairing the effectiveness of the seal.

Preferably the tubular sealing sleeve includes two sets of annular inwardly projecting sealing ribs on the inner surface of the sleeve which engage the respective pipe ends in a fluid tight manner. With this arrangement only the portion of the sleeve between the axially innermost pair of ribs is exposed to the hydrostatic pressure of the fluid in the pipe. The casing is therefore less prone to bulging at high hydrostatic pressures and, in consequence, the casing can be made of lighter construction than a conventional coupling with the equivalent performance specification. This means that the coupling is less expensive and easier to handle during manufacture.

Joining together pipes with plain ends with couplings without the need for pipe preparation is quicker and more economical than other methods such as welding, screw threading, flanging, grooving or shouldering. However because of the enormous axial forces that may be involved in pipelines operating at pressures of say 16 bars, it is difficult to construct a coupling that can reliably withstand such forces.

In the coupling of GB-A-1582858, axial restraint is provided by two frustoconical rings with gripping teeth on their inner edges. The gripping rings are located at the sides of the sealing sleeve and held in position within the casing by means of snap rings. When the casing is tightened the gripping teeth bite into the pipe ends to provide axial restraint for the pipes.

There are a number of disadvantages with this arrangement. The gripping teeth are sharp and are exposed. This presents a hazard to the pipe fitters who might cut themselves when handling the couplings prior to fitting.

The teeth are exposed and may come into contact with water and other corrosive liquids depending on the environment in which they are employed. The teeth are usually made of a hard steel that is prone to crevice corrosion.

The geometry of the toothed gripping device is upset on clamping on to the pipe. The specially shaped snap rings that are required to support the gripping rings add to the complexity of the coupling and they only provide partial support for the gripping ring. The snap rings may act as fulcrums over which the teeth are bent when loaded and there is thus a potential for the teeth to snap off.

The geometry of the gripping ring is liable to be further upset if a C-shaped sealing sleeve is used for the reasons explained above. The bulging of the casing may cause the toothed gripping ring to be lifted out of contact with the pipe leading to failure.

Another type of known coupling is described in GB-A-2167145. This coupling, does not include toothed rings as described above, but it utilises annular sealing members arranged at either end of an annular sleeve, which has wedge-shaped ends. Two flange members fit at either end of the coupling, and a tensioning means is provided so that the flange members can be urged axially towards one another. This movement compresses the sealing members against the wedge-shaped ends of the sleeve, which in turn forces the sealing members radially inwardly to form a seal against the surface of the pipes.

A plurality of hard gripping members is embedded in each sealing member. Each gripping member has a tooth or teeth formed at one end, and is arranged in the sealing member so that the teeth are flush with, or adjacent, the inner surface of the sealing member. The gripping member is inclined at an angle relative to the axis of the coupling, and the axially outer end of each gripping member is arranged to be completely covered by, but closely adjacent, the outer surface of the sealing member near the corner in the flange member. As the coupling is tightened, the flange members move axially inwardly, compressing the sealing member, and urging the gripping members towards the pipes, causing them to bite into the surfaces of the pipes. Because of the axial displacement between the inner and outer ends of the gripping members, the gripping members will pivot as the sealing member is compressed.

In this coupling, the sealing action of the sealing member against the pipes' surfaces, and the biting action of the gripping members are not independent of each other. The gripping members and the sealing members are acted on simultaneously as the flanges are moved axially. Thus the gripping members and the sealing members restrict one another's movement. If the teeth of the gripping member bite the surface of the pipe before the sealing member is properly seated against the surface of the pipe, this could affect the sealing properties off the seal.

According to a preferred embodiment of the present invention the sealing sleeve has a circumferential slot in its outer surface and a gripping ring with inwardly projecting gripping teeth is located in the slot, the arrangement being such that, in use, tightening the tensioning means causes the sealing sleeve to be pressed into sealing engagement with the pipe ends and the gripping teeth to penetrate the bottom of the slot and to engage the outer surface of the pipe.

In a preferred form of the invention a slot with a gripping ring is provided at each end of the coupling. The slot may be frustoconical with the inner end nearer the axial middle of the coupling than the outer end. The gripping ring is also preferably frustoconical and preferably is an incomplete ring so that it can easily be expanded and compressed.

Preferably the gripping rings are located with their outer edges in the angles between the tubular portion of the casing and the end flanges.

Preferably the inner casing and the outer casing both have longitudinal gaps and the gap in the inner casing is offset circumferentially from the gap in the outer casing so that the sealing sleeve is supported around its entire periphery either by the inner casing, or the outer casing, or both casings.

Both the inner and outer casing may_have their axial end margins bent inwardly to form the inwardly projecting end flanges.

By locating the gripping rings in slots in the outer surface of the sealing sleeve the gripping teeth are protected and will not injure the pipe fitter when being handled prior to use.

Preferably the slot in the sleeve is wider than the thickness of the gripping rings so that the sealing sleeve does not interfere with the action of the gripping ring. The ring is only restrained by the angle of the inner and outer casings formed between their tubular walls and their annular flanges. The casing bears directly against the outer edge of the gripping ring. When the casing comprises an inner and an outer casing, as described hereinbefore, the inner casing bears against the gripping ring. This further reduces the tendency of the outer casing to bulge, compared with a single piece casing.

In the preferred embodiment of the invention the tensioning means applies a radially compressive force to the casing.

An embodiment of the invention will now be described, by way of example, with reference to the accompanying drawings, of which:-
Fig. 1 shows a perspective cut-away view of a coupling in accordance with the invention;
Fig. 2 shows an end view of the coupling of Fig. 1;
Fig. 3 shows a longitudinal section through the coupling of Fig. 1;
Fig. 4 shows a perspective view of gripping ring of the coupling of Figs. 1 to 3; and
Fig. 5 shows a longitudinal section through a coupling similar to the coupling of Figs 1 to 4 but with a modified sealing sleeve.

A pipe coupling 1 comprises an outer tubular casing 10 an inner tubular casing 20 and a sealing gasket 30. The outer tubular casing 10 is formed of rolled steel, with a longitudinal gap 13. The casing is folded back on itself at its free ends and welded at 14 to form loops 15 along opposite edges of the longitudinal gap 13. Pins 16 are inserted in the loops. Tensioning screws 17 pass through transverse holes in one of the pins 16 into tapped transverse holes in the other of the pins 16, so as to interconnect the two free ends of the outer casing. Slots 18 are cut in the loops 15 so as to provide clearance for the screws. The axial end margins of the casing 10 are bent inwardly at right angles to form radial flanges 19.

The inner tubular casing 20 is of rolled steel and has a longitudinal gap 23. The end margins of the casing 20 are bent inwardly at right angles to form radial flanges 24. The casing 20 fits inside the outer casing 10, the axial length of the casing 20 being slightly less than that of the casing 10 so that the flanges 24 fit inside and, in use, are supported laterally by the flanges 19.

The sealing gasket 30 is of rubber formed from a length of flat extrusion which is rolled into a tube and joined by welding to form a complete cylinder. Alternatively, the rubber gasket may be moulded. The outer surface 31 of the gasket is smooth but the inner surface is formed with two sets of annular sealing ribs 32 which project inwardly and have a square profile. In the present embodiment there are three ribs in each set. Towards each end of the gasket the inner surface is stepped inwardly to form lands 33. The extreme ends of the gasket are formed by axial extensions of the inner part of the gasket, which form end seals 34.

The gasket 30 fits inside the inner casing with the side flanges 24 fitting into a recess 35 formed behind the end seals 34.

A frustoconical slot 36 is formed in the outer surface of the gasket at each end of the gasket. The outer end of each slot lies at the axial end of the outer surface, the inner end of the slot lies close to the inner surface of the land 33. The slope of the slot is such that the inner end is nearer the axial middle of the gasket than the outer end.

A gripping device in the form of a frustoconical ring 40 is located in the slot 36. The ring 40 is made of hard steel and is an incomplete ring having a gap 41 so that it can be fitted into the slot 36. The width of the slot is greater than the thickness of the steel sheet from which the ring is formed so that the sides of the slot do not interfere with the operation of the ring. The inner edge of the ring 40 is cut at intervals and the portions between cuts are distorted to form teeth 42. When the coupling is assembled the teeth sit in the bottom of the slot 36 and the outer edge 43 of the ring sits in the angle formed by the flange 24 on the inner casing.

In use the ends of two plain ended pipes are inserted into the coupling from opposite ends as shown in Fig. 3. A space of say 10mm may be left between the pipe ends to allow for angular deflection, or to avoid abrasive wear, or to dampen vibration. With the coupling in place, the screws 17 are tightened to clamp the coupling to the pipes. As the screws 17 are tightened, the loops 15 of the outer casing 10 are drawn together, thereby applying a radially compressive force to the outer casing. The inner casing is arranged so that its longitudinal gap 23 is diametrically opposite the longitudinal gap 13 in the outer casing. In this way the inner casing supports the gasket in the region of the gap 13 where there is no support from the outer casing. The inner casing is dimensioned so that when the coupling is tightened around the pipe ends, then only a small longitudinal gap 23 remains.

The tightening of the tensioning screws 17 presses the annular sealing ribs 32 into sealing contact with the outer surfaces of the pipe ends, the sealing ribs deforming easily due to their height, width and the grade of material used. At the same time, the gripping ring 40 is pushed inwardly by the angle of the inner casing gripping the outer edge of the ring. The compression of the gripping ring causes the edges of its teeth 42 to penetrate through the gasket 30 at the bottom of the slot 36 and bite into the surface of the pipe, thereby providing locking of the coupling to the pipe against axial movement. The teeth are designed to make contact at approximately 5mm centres around the circumference with a width of approximately 2mm for each tooth, giving approximately 40% contact around the periphery of the pipe.

The extensions 34 are trapped between the flanges 19 and 24 on the inner and outer casings and the outer surfaces of the pipe ends to form end seals. Thus liquid and dirt is prevented from entering the coupling from outside.

The coupling described has a number of advantages over known couplings. By using a series of ribs a seal is achieved which is effective at high hydrostatic pressures, for example 16 bars. However, the axial length of the gasket that is exposed to the hydrostatic pressure is small compared with the overall length L of the coupling. This means that the tendency for the casing to bulge is less than with known couplings where almost the entire length of the gasket is exposed to the hydrostatic pressure of the fluid. As a result, the casing of the coupling of the present invention can be of lighter construction than an equivalent conventional coupling. For example, with a coupling for joining together two pipes of around 20cm in diameter, (approximately 8 inches), the thickness of the outer casing can be approximately 3mm, and the thickness of the inner casing approximately 2.5mm. An advantage of using thinner metal is that the machinery required to form the casings is less expensive.

By locating the gripping ring in a slot in the outside of the gasket, the teeth are protected when the coupling is not on use and the coupling can be handled easily without a risk of the operator being cut. The resilience of the gripping ring and of the rubber of the gasket causes the teeth to retract back into the slot when the coupling is unfastened so that they no longer project through the inner surface of the gasket. The end seals keep out contamination which might enter the seals from outside and thereby affect performance. The use of low alloy, or high carbon, steel to produce hard teeth on the gripping ring renders them prone to corrosion. The end seals prevent the ingress of moisture, for example sea water, which could cause such corrosion.

The arrangement for holding the gripping rings is of simple construction and apart from the casings and the gasket, involves no separate parts. The entire structure is accommodated within the two pairs of annular flanges 19 and 24 which gives the total structure great strength and stability.

Because of the resilience in the gripping ring and the rubber, the clamping arrangement releases itself when the coupling is released.

The axial restraints operate independently of the gasket.

The teeth do not cut through the gasket entirely, they merely pierce it a 5mm intervals and so the coupling can be repeatedly used.

Because the toothed ring is placed in a wide slot it is free to find its own settlement. The outer edge is located in the angle between the flange and web portions of the inner casing, and the position of the inner edge is merely determined by the position where it bites into the pipe. As the coupling is tightened the teeth bite deeper into the pipe. The angle of approximately 45 degrees which is established between the ring and the pipe surface when the ring first bites is maintained as the coupling is tightened. The angle in the inner casing bears directly against the outer edge of the gripping ring.

Because the toothed ring bears against the angle in the inner casing, the reaction forces from the toothed ring can be spread through the surface of the inner casing to the outer casing. This further reduces the tendency of the casing to bulge, compared to a single piece casing.

Since in the preferred embodiment the seal is not of the C shaped type, it is not dependent on the hydrostatic pressure for effectiveness and therefore the structure is stable in both the charged and uncharged states. Likewise the axial gripping force is independent of the fluid pressure in the pipeline.

Although in the preferred embodiment the teeth are approximately 5mm apart, and each tooth has a width of approximately 2mm, the actual design of the spacing and width of each tooth will depend to some extent on the material from which the pipes are made. Different designs of the coupling can use alternative teeth spacings and teeth widths, depending on the hardness of the pipes for which the coupling is intended.

The sharpness of the teeth may also depend on the material of the pipes for which the coupling is intended. For example, in a coupling intended for joining pipes made of plastics material, the teeth may be blunt. In such an embodiment, as the casing is tightened around the joint, the teeth might not penetrate all of the way through the rubber gasket to bite into the surface of the pipes. In this case, the teeth can still exert sufficient force through the rubber gasket to grip the plastics pipes to axially restrain the coupling on the pipes.

Although the invention has been described in relation to a coupling for joining pipes of equal diameter it will he appreciated that it can be modified to form a stepped coupling of asymmetric configuration for joining pipes of unequal diameter.

In such a stepped coupling the outer and inner casings would be constructed to extend deeper on the side of the smaller pipe. The gasket would be radially thicker on the side of-the smaller pipe, and include a slot, as described above, into which a toothed ring could be fitted. In one form of construction of a stepped coupling, the radial thickness (i.e. the radial dimension from the outer periphery to the inner periphery) of the toothed ring on the side of the smaller pipe could be greater than that of the other toothed ring.

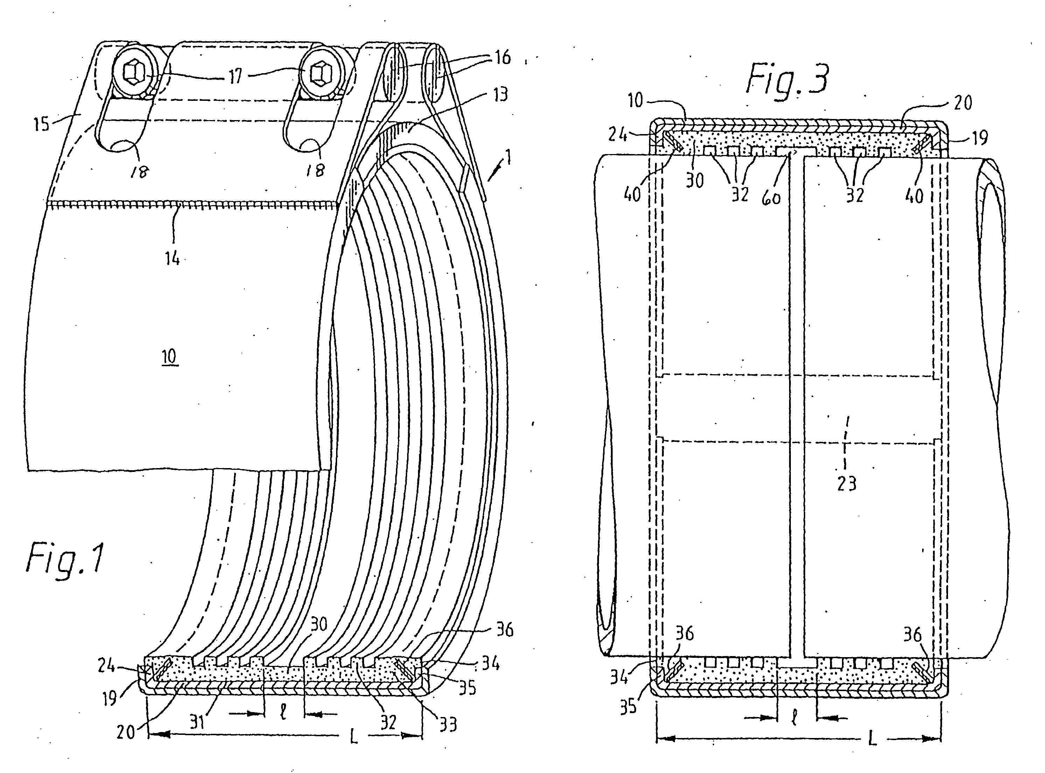

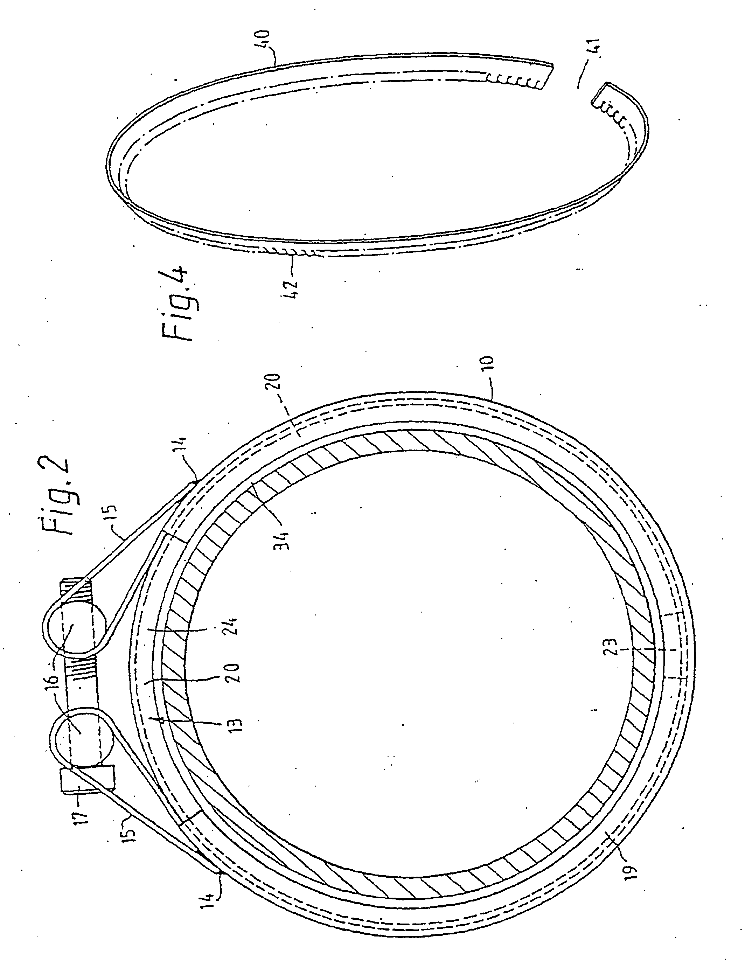

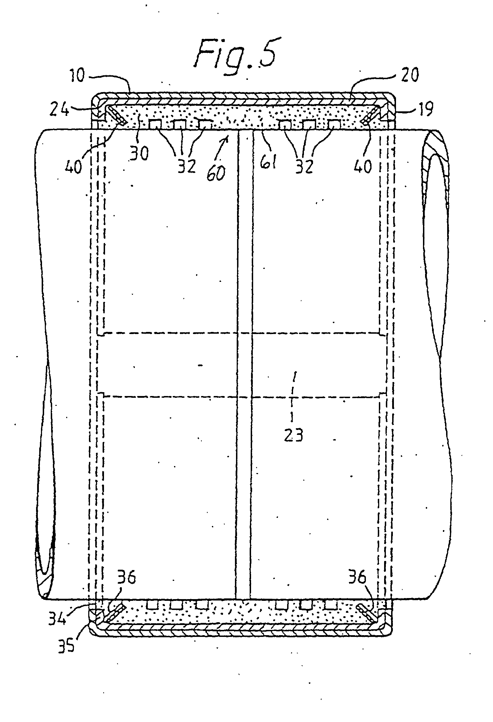

Alternatively, the radial thickness of the toothed rings could he the same, the overall diameter of the ring on the side of the smaller pipe being less than that of the other ring. In this form of construction, the thickness of the inner casing would be increased, on the side of the smaller pipe, so that the respective toothed ring would bear against a portion of the inner casing. Referring now to Fig. 5, this shows a coupling similar to the coupling of Figs 1 to 4 but with a modified sealing sleeve. In Fig. 5 the corresponding elements have the same reference numerals as Figs 1 to 4. The sealing sleeve 30 of Fig. 5 differs from that of Fig. 3 in that there is no cavity formed in the region 60 adjacent the ends of the pipes, between the web portion of the sleeve 30 the ribs 32 and the outsides of the pipe ends. Instead the web portion extends inwardly to form an annular land 61 which is pressed against the outside of the pipe ends when the coupling is tightened around the pipes to form a seal.

The absence of the cavity does not impair the sealing qualities of the coupling and allows the coupling to be used in sanitary applications such as food and chemical processing where the presence of a cavity as in Fig. 3 would preclude the use of the coupling because the fluid passing through the coupling would accumulate in the cavity and could not be cleared out easily by flushing. Typically the width of the land 61 would be 25 to 45mm.

## Claims

1. A pipe coupling for coupling together two pipes in a fluid-tight manner, comprising an outer tubular casing (10), an inner tubular casing (20), a tubular sealing sleeve (30) and means (17) for tightening the outer casing (10) around the inner casing (20) and the sealing sleeve (30), the inner and outer casings including inwardly projecting end flanges (19 and 24), the sealing sleeve (30) including end seals (34) which are disposed radially inwardly of the end flanges (19 and 24) so that in use, when the tensioning means are tightened, the sealing sleeve is urged into sealing contact with the outer surfaces of the pipe ends and the end seals form seals between the flanges of at least the inner casing and the outer surface of the pipe ends.

2. A coupling according to Claim 1 in which the end seals (34) are axial extensions of the sealing sleeve which are trapped between the flanges and the pipe.

3. A coupling according to Claims 1 or 2 in which the sleeve (30) including two sets of annular inwardly projecting sealing ribs (32) on the inner surface of the sleeve which engage the respective pipe ends in a fluid-tight manner, the sealing ribs (32) being of substantially square profile, one rib of each set being located so as in use to be near the end of the corresponding pipe whereby the length of the sealing sleeve that is exposed to the hydrostatic pressure in the pipes is small compared with the overall length of the sealing sleeve.

4. A coupling according to Claims 1, 2 or 3 and including gripping means (40) for securing the pipes axially.

5. A coupling according to Claims 2 or 3 in which a gripping means (40) is provided at each end of the coupling.

6. A coupling according to Claim 4 or 5 in which the gripping means (40) is a frustoconical ring.

7. A coupling according to claim 4, 5 or 6 in which the gripping means (40) is in the form of a toothed ring.

8. A coupling according to any of Claims 6 or 7 in which the gripping ring is an incomplete ring.

## Patentansprüche

1. Rohrkupplung zum fluiddichten Verbinden von zwei Rohren, die ein äußeres röhrenförmiges Gehäuse (10), ein inneres röhrenförmiges Gehäuse (20), eine röhrenförmige Dichtungsmuffe (30) und Mittel (17) zum Anziehen des äußeren Gehäuses um das innere Gehäuse (20) und die Dichtungsmuffe (30) herum hat, wobei das innere und das äußere Gehäuse nach innen vorspringende Endflansche (19 und 24) haben, die Dichtungsmuffe (30) Enddichtungen (34) hat, die radial einwärts von den Endflanschen (19 und 24) angeordnet sind, so dass im Gebrauch, wenn die Spannmittel festgezogen werden, die Dichtungsmuffe in dichtenden Kontakt mit den äußeren Oberflächen der Rohrenden gedrängt wird und die Enddichtungen zwischen den Flanschen von wenigstens dem inneren Gehäuse und der äußeren Oberfläche der Rohrenden Abdichtungen bilden.

2. Kupplung nach Anspruch 1, bei der die Enddichtungen (34) axiale Verlängerungen der Dichtungsmuffe sind, die zwischen den Flanschen und dem Rohr eingeschlossen sind.

3. Kupplung nach Anspruch 1 oder Anspruch 2, bei der die Muffe (30) zwei Sätze von ringförmigen nach innen vorspringenden Dichtungsrippen (32) an der Innenfläche der Muffe hat, welche die betreffenden Rohrenden fluiddicht in Eingriff nehmen, wobei die Dichtungsrippen (32) ein weitgehend quadratisches Profil haben, wobei eine Rippe jedes Satzes so angeordnet ist, dass sie im Gebrauch nahe dem Ende des entsprechenden Rohres ist, wodurch der Längenabschnitt der Dichtungsmuffe, der dem hydrostatischen Druck in den Rohren ausgesetzt ist, verglichen mit der Gesamtlänge der Dichtungsmuffe klein ist.

4. Kupplung nach Anspruch 1, 2 oder 3 und mit einer Einspannvorrichtung (40) zum axialen Befestigen der Rohre.

5. Kupplung nach Anspruch 2 oder Anspruch 3, bei der an jedem Ende der Kupplung eine Einspannvorrichtung (40) bereitgestellt ist.

6. Kupplung nach Anspruch 4 oder Anspruch 5, bei der die Einspannvorrichtung (40) ein kegelstumpfförmiger Ring ist.

7. Kupplung nach Anspruch 4, 5 oder 6, bei der die Einspannvorrichtung (40) die Form eines gezahnten Rings hat.

8. Kupplung nach Anspruch 6 oder Anspruch 7, bei der der Einspannring ein unvollständiger Ring ist.

## Revendications

1. Raccord de tuyau pour joindre ensemble deux tuyaux d'une manière étanche aux fluides, comprenant un enveloppement tubulaire externe (10), un enveloppement tubulaire interne (20), un manchon d'étanchéité tubulaire (30) et des moyens (17) pour serrer l'enveloppement externe (10) autour de l'enveloppement interne (20) et du manchon d'étanchéité (30), les enveloppements interne et externe comportant des brides d'extrémité saillant vers l'intérieur (19 et 24), le manchon d'étanchéité (30) comportant des joints étanches d'étanchéité (34) qui sont disposés radialement vers l'intérieur des brides d'étanchéité (19 et 24) de telle sorte qu'en cours d'utilisation, quand les moyens de serrage sont serrés, le manchon d'étanchéité soit poussé en un contact étanche avec les surfaces externes des extrémités de tuyaux et les joints étanches d'étanchéité forment des joints étanches entre les brides au moins de l'enveloppement interne et la surface externe des extrémités de tuyaux.

2. Raccord selon la revendication 1, dans lequel les joints étanches d'extrémité (34) sont des extensions axiales du manchon d'étanchéité qui sont emprisonnées entre les brides et le tuyau.

3. Raccord selon la revendication 1 ou 2, dans lequel le manchon (30) comporte deux ensembles de nervures d'étanchéité annulaires saillant vers l'intérieur (32) sur la surface interne du manchon qui engagent les extrémités de tuyaux respectives d'une manière étanche aux fluides, les nervures d'étanchéité (32) étant d'un profil sensiblement carré, une nervure de chaque ensemble étant placée de telle sorte qu'en cours d'utilisation elle soit près de l'extrémité du tuyau correspondant si bien que la longueur du manchon d'étanchéité qui est exposée à la pression hydrostatique dans les tuyaux soit petite comparée à la longueur globale du manchon d'étanchéité.

4. Raccord selon la revendication 1, 2 ou 3, et comportant des moyens de fixation (40) pour fixer les tuyaux axialement.

5. Raccord selon la revendication 2 ou 3, dans lequel un moyen de fixation (40) est fourni à chaque extrémité du raccord.

6. Raccord selon la revendication 4 ou 5, dans lequel le moyen de fixation (40) est un anneau tronconique.

7. Raccord selon la revendication 4, 5 ou 6, dans lequel le moyen de fixation (40) est en forme d'anneau denté.

8. Raccord selon la revendication 6 ou 7, dans lequel l'anneau de fixation est un anneau incomplet.
